# EUROPEAN PATENT SPECIFICATION

(11) **EP 2 697 991 B1**
(45) Date of publication and mention of the grant of the patent: **11.12.2019**
(21) Application number: 12715368.2
(22) Date of filing: 12.04.2012
(51) Int. Cl.: H04W 12/00, H04W 12/02, H04L 29/06, H04W 88/04, H04W 76/12, H04L 29/08

(54) **SENDING USER PLANE TRAFFIC IN A MOBILE COMMUNICATIONS NETWORK**
SENDEN VON USER-PLANE VERKEHR IN EINEM MOBILEN KOMMUNIKATIONSNETZWERK
TRANSMISSION DE TRAFIC DE PLAN UTILISATEUR DANS UN RÉSEAU DE COMMUNICATION MOBILE

(30) Priority: 12.04.2011 US 201161474437 P
(43) Date of publication of application: 19.02.2014
(73) Proprietor: Telefonaktiebolaget LM Ericsson (publ), 164 83 Stockholm (SE)
(72) Inventor: FRIMAN, Erik, S-113 24 Stockholm (SE); ERIKSSON, Hans, S-192 48 Sollentuna (SE); VIKBERG, Jari, S-153 38 Järna (SE); WESTBERG, Lars, S-745 96 Enköping (SE)
(74) Representative: Ericsson
(86) International application number: PCT/EP2012/056712
(87) International publication number: WO 2012/140158

(56) References cited:
- EP-A1- 1 883 195
- WO-A2-2011/011458
- US-A1- 2010 034 089
- US-A1- 2011 075 557
- "Digital cellular telecommunications system (Phase 2+); Universal Mobile Telecommunications System (UMTS); LTE; Network architecture (3GPP TS 23.002 version 9.2.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V9.2.0, 1 January 2010 (2010-01-01), XP014045170,

## Description

### TECHNICAL FIELD

The invention relates to the field of sending user plan traffic in a mobile communications network.

### BACKGROUND

It is known to provide caching in a mobile network. Caching is based on the idea that a large percentage of Internet traffic is repetitive, and that eliminating the sending of repeating content from its origin may offer a savings opportunity in terms of required bandwidth. The main principle of caching in a mobile network is that copies of the repeated content in, for example, the Internet, are moved closer to mobile users. For example, such content may be cached in different parts of the Radio Access Network (RAN), in the Core Network (CN), or just "above" the CN.

The main benefits that can be achieved with caching in mobile networks are as follows:
a. A decrease in the cost of transport in the mobile network as well as the cost for Internet peering. This is achieved "above the cache", as the cached information in principle is only transferred once in the transmission links above the cache.
b. An improved quality of experience for the mobile end-users. This is mainly achieved with lower delays, as the cached information can be returned faster to the mobile users from the cache (compared to the case where the information is obtained all the way from the original location).
c. Provision of new services, such as content hosting and storage/backup for the operators. A mobile operator can agree with content providers to ensure that the content from a specific content provider is delivered in a better way to the mobile users in the mobile operator's network.

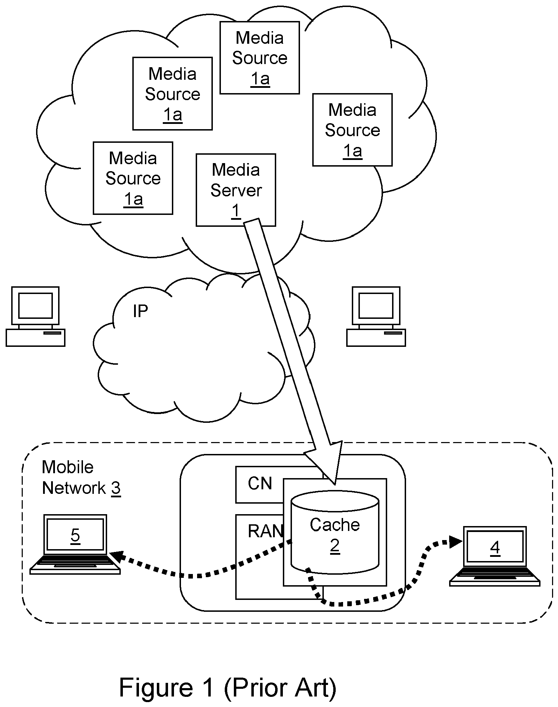

Caching can also be used for the media distribution towards the mobile users. Instead of retrieving downloadable media from the media server or from other users, the media can be retrieved from the cache. Figure 1 shows how media information from a media server 1 that has access to several media sources 1a is pushed in to a cache 2 in a mobile network 3 and then the mobile users 4, 5 can receive the media information directly from the cache 2 instead of from the media server 1. Note that that caching can be used for almost any type of internet content, and so the example of media content shown in Figure 1 could be replaced with almost any other type of content.

Common RAN caching is about including a cache 2 in the RAN for all different radio access technologies, for example GSM, WCDMA and LTE. A good placement for a RAN cache is at a common RAN Controller, for example a node that includes either a Base Station Controller (BSC) or Radio Network Controller (RNC) or both. A challenge for caching is to ensure that the user plane traverses via the RAN cache. If the cache is included in the RNC, then the WCDMA/HSPA user plane automatically traverses via the RAN cache. The same applies for GPRS/EDGE user plane traffic where the RAN cache is included at the BSC. However, in the latter case there is an additional challenge as the GPRS/EDGE user plane traffic is normally encrypted between the MS/UE and the Serving GPRS Support Node (SGSN) and therefore the traffic is encrypted when traversing through the BSC.

A problem arises then using the Long Term Evolution (LTE) architecture. LTE is a communication network technology currently under development by the 3rd Generation Partnership Project (3GPP). LTE requires a new radio access technique termed Evolved Universal Terrestrial Radio Access Network (E-UTRAN), which is designed to improve network capacity, reduce latency in the network, and consequently improve the end-user's experience. System Architecture Evolution (SAE) is the core network architecture for LTE communication networks.

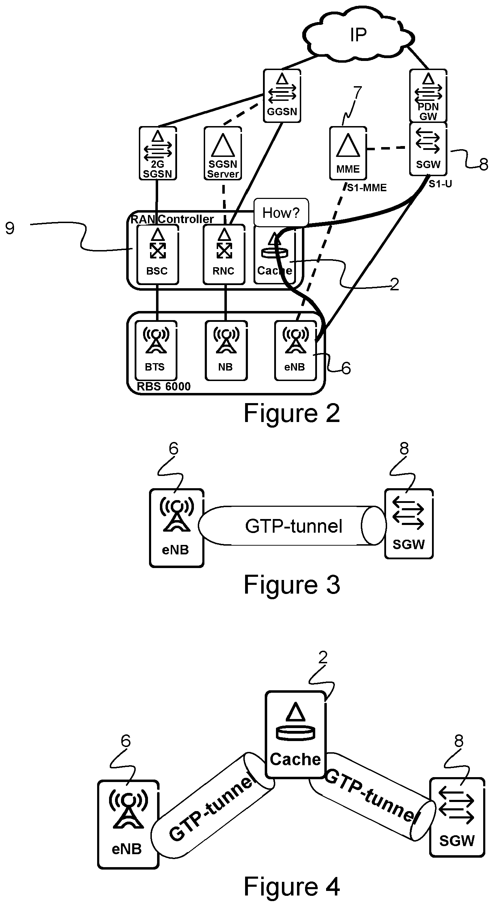

As shown in Figure 2, LTE is a so called "flat RAN architecture" without any RAN controller. The control plane interface (S1-MME) goes directly between an eNodeB (eNB) 6 and a Mobility Management Entity (MME) 7, and the user plane interface (S1-U) goes directly between the eNB 6 and a Serving GW (SGW) 8. Note that the SGW 8 can be integrated together with a PDN GW, but for simplicity, the term SGW is used herein to denote the user plane gateways in the core network. To enable caching, the user plane interface needs to be routed via a RAN Controller 9, shown as the thick black line between the eNB 6, the cache 2 and the SGW 8, and the textbox "How?"

As LTE is a flat RAN architecture, there is at present no way of ensuring that user plane traffic traverses the RAN controller 9 and hence can access the RAN cache 2.

Furthermore, the same problem applies to other circumstances in which it is desirable for user plane traffic to traverse a particular node. For example, instead of the caching problem described above, it may be required for traffic to traverse a particular node that provides "cloud" applications and/or software hosting. Similarly, user plane traffic optimization or packet inspection may be required in the node. In any of these exemplary cases, there is currently no way of ensuring that user plane traffic is routed via a particular node located between the eNB 6 and the SGW 8. US 2010/034089 discloses a method of interception of tunnelled traffic.

### SUMMARY

It is an object of the invention to allow user plane traffic to traverse a node located between a base station and a Serving Gateway, such as a cache in a RAN controller, in a mobile communications network such as an LTE network. According to a first aspect, there is provided a method of sending user plane traffic via a node located between a base station and a Serving Gateway in a mobile telecommunications network. The base station receives a message containing tunnelling protocol information identifying the Serving Gateway. It then sends a second message towards the node, the second message including tunnelling protocol information identifying the base station and the Serving Gateway. The base station then receives a third message from the node, the third message including tunnelling protocol information for the base station to use towards the node, and tunnelling protocol information for the Serving Gateway to use towards the node. A fourth message is sent, the fourth message including tunnelling protocol information for the Serving Gateway to use towards the node. This allows tunnels to be established between the base station and the node, and the node and the Serving Gateway. User plane traffic can then be sent between the base station and the Serving Gateway via the node.

As an option, local identifiers for User Equipment associated with the user plane traffic and for the local bearer used are created. Tunnelling protocol information is selected identifying the base station, and the tunnelling protocol information identifying the base station and local identifiers are included in the second message.

The local identifiers and tunnel endpoint identifiers are optionally stored in a memory.

As an option, a determination is made that the node can no longer be contacted. In this case, a path switch request is sent to a Mobility Management Entity, the path switch request message including an address and tunnelling protocol information identifying the base station, in order to establish a new tunnel between the base station and the Serving Gateway to replace the previously established first and second tunnels.

The method optionally comprises selecting a node from a pool of nodes and, in the event of losing a connection with the selected node, selecting a further node from the pool of nodes.

The base station is optionally selected from an eNodeB and a Home eNodeB Gateway, and the node optionally comprises any of a cache, a data host, a packet analysis function and a user plane traffic optimization function.

According to a second aspect, there is provided a method of sending user plane traffic via a node located between a base station and a Serving Gateway in a mobile telecommunications network. The node receives, from the base station located in the Radio Access Network a message. The message includes tunnelling protocol information identifying the base station and the Serving Gateway. The node establishes a first tunnel between the node and the base station and a second tunnel between the node and the Serving Gateway. A further message is sent to the base station, the further message including tunnelling protocol information for the base station to use towards the node, and tunnelling protocol information for the Serving Gateway to use towards the node. The node can then receive user plane traffic sent between the base station and the Serving Gateway via the node.

As an option, the node comprises any of a cache, a data host, a packet analysis function and a user plane traffic optimization node.

According to a third aspect, there is provided a base station for use in a mobile communication network. The base station is provided with a first receiver for receiving a message comprising tunnelling protocol information identifying a Serving Gateway. A transmitter is provided for sending a second message towards a node located in a Radio Access Network, the second message including tunnelling protocol information identifying the base station and tunnelling protocol information identifying the Serving Gateway. A second receiver is provided for receiving a third message from the node, the third message including tunnelling protocol information for the base station to use towards the node, and tunnelling protocol information for the Serving Gateway to use towards the node. The transmitter is arranged to send a fourth message, the fourth message including tunnelling protocol information for the Serving Gateway to use towards the node. A processor is provided for sending and/or receiving user plane traffic towards the Serving Gateway via the node.

As an option, the processor is further arranged to create local identifiers for User Equipment associated with the user plane traffic and for the local bearer used, and the processor is further arranged to select tunnelling protocol information identifying the base station, wherein the tunnelling protocol information identifying the base station and local identifiers are included in the second message. As a further option, the base station is provided with a computer readable medium in the form of a memory, the memory being usable for storing the local identifiers and tunnel endpoint identifiers.

The processor is optionally arranged to determine that the node can no longer be contacted. In this case, the base station further comprises a second transmitter for sending a path switch request to a Mobility Management Entity, the path switch request message including an address and tunnelling protocol information identifying the base station, in order to establish a new tunnel between the base station and the Serving Gateway to replace the previously established first and second tunnels.

The base station is optionally selected from an eNodeB and a Home eNodeB Gateway

According to a fourth aspect, there is provided a node for use between a base station and a Serving Gateway in a mobile communications network. The node is provided with a receiver for receiving, from the base station, a message. The message includes tunnelling protocol information identifying the base station and the Serving Gateway. A processor is provided for arranging the establishment of a first tunnel between the node and the base station and a second tunnel between the node and the Serving Gateway. A first transmitter is provided for sending a further message to the base station, the further message including tunnelling protocol information for the base station to use towards the cache, and tunnelling protocol information for the Serving Gateway to use towards the cache. The processor is arranged to send user plane traffic between the base station and the Serving Gateway via the node using the first and second tunnels.

An example of such a node is a Radio Access Network Controller.

According to a fifth aspect, there is provided a computer program, comprising computer readable code which, when run on a base station, causes the base station to behave as a base station as described above in the third aspect.

According to a sixth aspect, there is provided a computer program, comprising computer readable code which, when run on a node for providing cached data in a mobile communications network, causes the node to behave as a node as described above in the fourth aspect.

According to a seventh aspect, there is provided a computer program product comprising a computer readable medium and a computer program as described above in either of the fifth or sixth aspects, wherein the computer program is stored on the computer readable medium.

### BRIEF DESCRIPTION OF THE DRAWINGS

Figure 1 illustrates schematically in a block diagram a network architecture for providing caching for media content in a mobile communication network;
Figure 2 illustrates schematically in a block diagram an LTE network architecture showing the problem of user plane traffic not traversing a cache;
Figure 3 illustrates schematically in a block diagram a principle of a GTP-tunnel between an eNodeB and a Serving Gateway;
Figure 4 illustrates schematically in a block diagram a principle of two GTP-tunnels between an eNodeB and a cache, and the cache and a Serving Gateway;
Figure 5 illustrates schematically in a block diagram a S1-RAN interface between the eNodeB and the cache;
Figure 6 is a signalling diagram showing the signalling flow for the S1-RAN interface according to an embodiment of the invention;
Figure 7 is a flow diagram showing steps according to an embodiment of the invention; Figure 8 is a flow diagram showing steps of a fall-back mechanism according to an embodiment of the invention;
Figure 9 illustrates schematically in a block diagram an IPSec Tunnel according to an embodiment of the invention;
Figure 10 illustrates schematically in a block diagram the function of an SeGW in a RAN controller according to an embodiment of the invention;
Figure 11 illustrates schematically in a block diagram an eNodeB according to an embodiment of the invention; and
Figure 12 illustrates schematically in a block diagram a Radio Access Network Controller node according to an embodiment of the invention.

### DETAILED DESCRIPTION

The following describes a technique that allows LTE user plane traffic to traverse via a RAN cache 2 in a RAN Controller 9. Furthermore, a fallback mechanism is provided for the case when the RAN Controller 9 fails. However, this is not intended to be a limiting example, and the following description applies to any case where a node needs to access user plane traffic between the base station (such as an eNB) 6 and the SGW 8. Examples of such nodes include nodes that provide cloud applications and software hosting. In this case, the node must have access to LTE user plane traffic between the eNB 6 and the SGW 8. Another example is a node that provides user plane traffic optimization, such as TCP optimization, video optimization or video enhancement. A further example is a node that performs packet inspection on user plane traffic, such as header inspection, shallow packet inspection, deep packet inspection and heuristic traffic analysis. Again, the node requires access to user plane traffic between the base station 6 and the SGW 8. The following description is based on the example where user plane traffic is sent via a cache located between the base station 6 and the SGW 8, but it will be appreciated that the cache could be substituted for any other type of node that requires access to the user plane traffic.

The term "tunnelling protocol information" used below refers to information used to set up a tunnel between nodes, and includes information such as a source or destination IP address and a Tunnelling Endpoint Identifier (TEID).

In the following description, the cache is located in a RAN, between the base station 6 and the SGW 8. However, for some network architectures the boundary between the RAN and the core network is difficult to define, so the skilled person will appreciate that the cache (or other node) is not necessarily located in the RAN; it may be located in the RAN or the core network at any point between the base station and the SGW.

If an S1-MME interface is unchanged it will go directly between the eNB 6 and the MME(s) 7. In other words, the control plane between eNB 6 and MME 7 doesn't traverse the node (such as a cache, packet inspection node etc.) that requires access user plane traffic.

The S1-U interface is therefore changed so that node that requires access to the user plane traffic (such as a RAN Controller 9 and the cache logic in the RAN Controller 9) becomes part of the user plane between eNB 6 and the SGW 8. The new logical path is eNB ↔ RAN Controller ↔SGW.

The following describes how the above arrangement can be achieved for the S1-U interface.

The GPRS Tunnelling Protocol (GTP), or at least the user plane part of it i.e. the GTP-U protocol, is used on the S1-U interface. Normally, the GTP-tunnel is located between the eNB 6 and SGW 8 as shown in Figure 3. However, Figure 4 shows the principle when the cache 2 has been included as part of the S1-U interface between eNB 6 and SGW 8. The GTP-tunnel that traversed between eNB 6 and SGW 8 is now divided into two different parts, one part between the eNB 6 and the cache 2, and another part between the cache 2 and the SGW 8. An advantage of this solution is that it can be introduced with changes only being required in the RAN. This means that the SGW 8 'sees' the cache 2 as an eNB 6, and the real eNB 6 is hidden from the SGW 8.

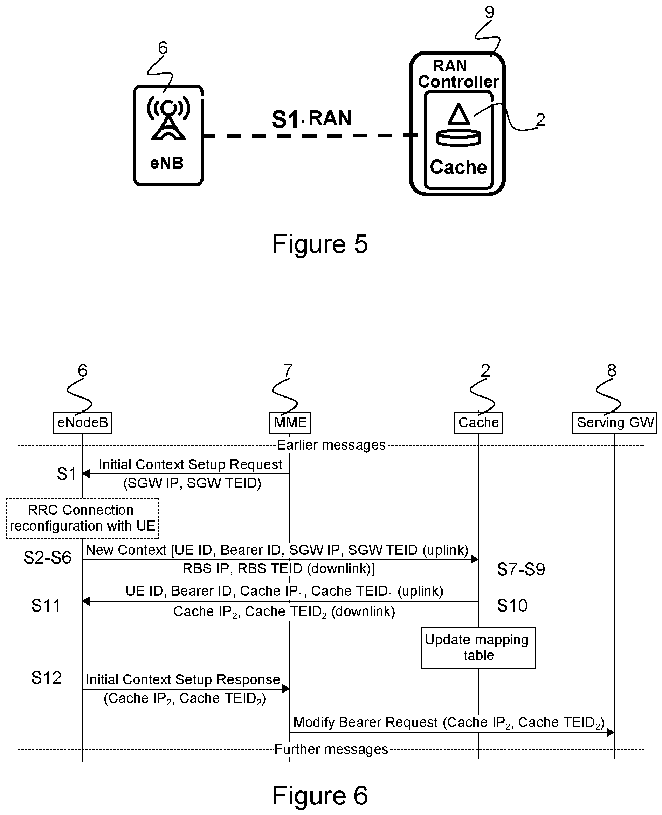

To enable the solution illustrated in Figure 4, a new control plane interface S1-RAN is created between the eNB 6 and the cache 2 in the RAN Controller 9, as shown in Figure 5.

For the establishment of the S1-RAN interface it is assumed beneficial that the eNB 6 establishes the connection towards the RAN Controller 9 and therefore there needs to exist a mechanism for the eNB 6 to select the most suitable RAN Controller 9 (suitable, for example, because the location of the RAN Controller 9 is very close to the normal transmission path of the S1-U interface).

One approach for S1-RAN interface establishment that avoids unnecessary configuration in the eNBs 6 is to apply a Domain Name System (DNS)-based solution. In this case the eNB 6 builds a Fully Qualified Domain Name (FQDN) consisting of the string "RAN", Public Land Mobile Network (PLMN) identifiers Mobile Network Code (MNC) and Mobile Country Code (MCC), and parts of identifiers for the eNB 6 (e.g. eNB-ID or parts of it), and then performs a DNS query. The returned IP-address is the IP-address of the RAN Controller configured in the DNS. An example of such a FQDN for MCC 345 and MNC 12 can be coded as: "RAN.eNB9876.mnc012.mcc345.pub.3gppnetwork.org"

Further details of the S1-RAN interface establishment and the protocol architecture are not described below. However, as an example it is suggested that this interface may be SCTP based as this is used e.g. for S1-MME in the eNB.

The usage of the S1-RAN interface is shown in Figure 6. This figure shows the case of an INITIAL CONTEXT SETUP REQUEST message being received at the eNB 6. There are also other cases when the S1-RAN interface signalling is triggered, for example:
1. Dedicated Bearer Activation procedure;
2. Bearer Modification procedure;
3. Context Management procedure; and
4. Handover related procedures.

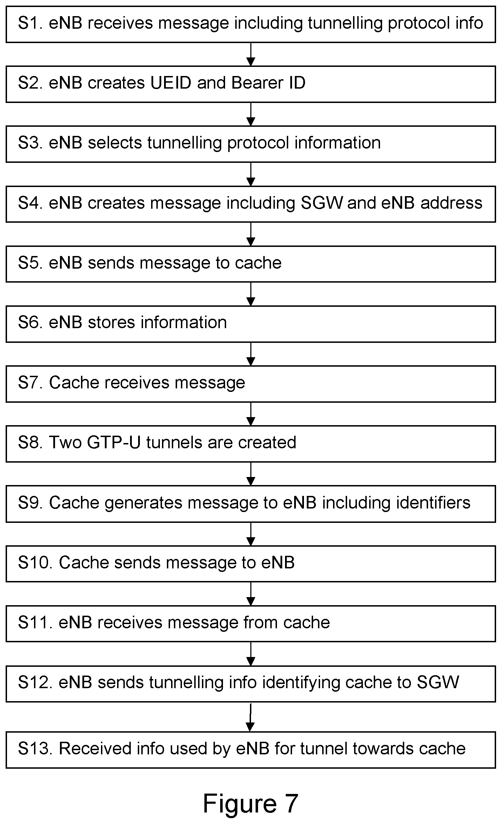

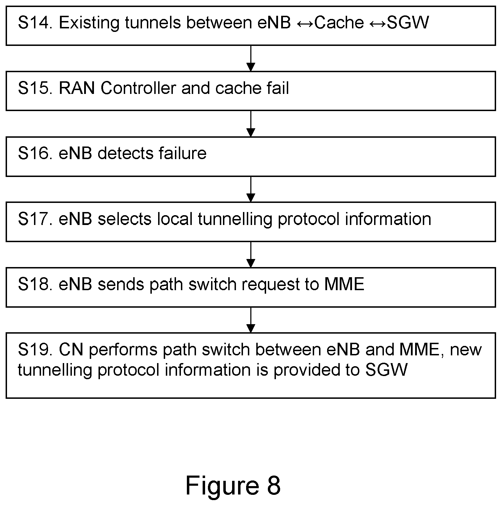

The following numbering corresponds to the numbering of Figures 6 and 7:
S1. The eNB 6 receives a message that contains GTP-U tunnelling protocol information including the SGW IP Address and TEID.
S2. The eNB 6 creates two local identifiers, UE ID and Bearer ID and stores these in the local UE context for this bearer. The UE ID could be, for example, the eNB UE S1AP ID and the Bearer ID could be for example the ERAB-ID.
S3. The eNB 6 selects local GTP-U tunnelling protocol information to identify the eNB 6, including the eNB IP Address and TEID (shown as RBS IP and RBS TEID in Figure 6).
S4. The eNB 6 creates a new S1-RAN message New Context including UE ID and Bearer ID. For uplink traffic, the SGW IP Address and TEID are included, and for downlink traffic, the eNB IP Address and TEID are included.
S5. The message is sent to the cache 2 in the RAN Controller 9.
S6. In addition, the eNB 6 may store locally all the above tunnelling protocol information as it may be needed later if a fallback solution is required.
S7. The cache 2 receives the message.
S8. The received tunnelling protocol information is used by the cache 2 to create two different GTP-U tunnels, one between the eNB 6 and cache 2, and another one between the cache 2 and SGW 8.
   For the GTP-U tunnel between the cache 2 and the SGW 8: The cache 2 starts using the received SGW IP Address and TEID as the destination information for a GTP-U tunnel towards the SGW 8. The cache 2 also selects local GTP-U tunnel identifiers, i.e. cache IP Address-2 and TEID-2 for the SGW 8 to use towards the cache 2.
   For the GTP-U tunnel between the cache 2 and the eNB 6: The cache 2 starts using the received eNB IP Address and TEID as the destination information for the GTP-U tunnel towards the eNB 6. The cache 2 also selects local GTP-U tunnel identifiers, i.e. cache IP Address-1 and TEID-1 for the eNB 6 to use towards the cache 2.
S9. The cache 2 creates a new S1-RAN message as a reply to the message and includes: UE ID and Bearer ID, the cache IP Address-1 and TEID-1, and cache IP Address-2 and TEID-2.
S10. The message is sent back to the eNB 6.
S11. When the eNB 6 receives the reply message from the cache 2, it performs the following actions:
S12. The received tunnelling protocol information about cache 2 IP Address-2 and TEID-2 is used by the eNB 6 to reply towards the core network as the destination GTP-U tunnel information in the RAN. In this case the IP-address is towards the cache 2 in the RAN Controller 9. In this way, user plane traffic between the eNB 6 and the core network is sent via the cache 2. The eNB 6 sends a response message to the MME 7 in response to the message received in step S1. The response message includes tunnelling protocol information for the SGW 8 to use towards the cache 2 as received from the cache 2.
S13. The received tunnelling protocol information about cache 2 IP Address-1 and TEID-1 is used by the eNB 6 for the GTP-U tunnel towards the cache 2 in the RAN Controller 9.
   Note that any of the messages and tunnelling protocol information described above may be sent via one or more intervening nodes.
   The proposed solution described above introduces a centralized RAN node, the RAN Controller 9, in the LTE user plane traffic path. The RAN Controller 9 becomes a possible Single Point of Failure for LTE traffic. Therefore a solution is needed for the case when RAN Controller 9 fails.
   One way to address this problem is to pool RAN Controllers 9 and/or caches (if the cache is not located at the RAN Controller 9), which allows the possibility to re-establish the GTP-U tunnels via a new RAN Controller and cache. Alternatively, a fallback may be performed to the initial traffic path i.e. that the GTP-U tunnel is rerouted to go directly between the eNB 6 and the SGW 8 again without traversing any RAN Controller 9 or cache 2.
   Note that if the session between the UE and the (old) cache 2 is terminated, the UE needs to re-establish the session that was previously established between the UE and the old cache 2. Where cache pooling is in place, the new session may be between the UE and a new cache, and where a fallback to the initial traffic path is in place, the new session would be between the UE and the servers outside mobile network (i.e. no caching is involved).
   Considering in more detail the second case, in which a fallback is performed to the initial traffic path, the main principles are illustrated in Figure 8. The following numbering corresponds to that of Figure 8:
S14. The initial scenario is that GTP-U tunnel for a UE session is divided into two steps: i) GTP-U tunnel between the eNB 6 and the RAN Controller/cache 2 and ii) GTP-U tunnel between the RAN Controller/cache 2 and the SGW 8.
S15. The RAN Controller 9 and the cache 2 go out of service and the GTP-U tunnel for the UE session breaks. In this case, the GTP-U tunnel is rerouted so that it once more goes directly between the eNB 6 and the SGW 8.
S16. There are different ways for the eNB 6 to detect that an RAN Controller 9 has gone down. The detection could be based on a lack of any traffic from this RAN Controller 9. Another possibility is to implement the GTP-U Path Management procedures Echo Request and Echo Reply that can be used to check if the other side is still active.
   When the eNB 6 detects the failure of the RAN Controller 9, the eNB 6 knows the tunnelling protocol information for the SGW8, such as the SGW IP-address and TEID, as these were included in the initial message from the MME 7 to establish the GTP-U tunnel. The SGW 8 knows only the RAN IP address and TEID (really the cache IP Address-2 and cache TEID-2 as described above). It is therefore mainly the downlink side of the GTP-U tunnel that needs to be rerouted and this information needs to be provided to the SGW 8.
S17. To reroute the downlink of the GTP-U tunnel in the SGW, the eNB 6 selects local tunnelling protocol information in the form of GTP-U tunnel identifiers, i.e. eNB IP Address and TEID. These could be the same as the eNB 6 initially provided to the RAN Controller 9 or these could be new ones.
S18. The eNB 6 sends a PATH SWITCH REQUEST message to the MME 7. The only new information in this message is the "Transport layer address" field that is set to the eNB IP Address and the GTP-TEID that is set to the eNB TEID.
S19. The core network performs a path switch between the eNB 6 and the MME 7, which results in modification of the bearer between the MME 7 and the SGW 8. New downlink GTP-U tunnel information is provided to the SGW 8.

One aspect about this solution is that the MME 7 sees this case as an X2-based handover within the same eNB 6. However, it is assumed that this doesn't create any problems in the MME 7 as the case is very similar to the case for HeNBs (Home eNB, also known as an LTE Femto base-station) when there is a HeNB-GW deployed. In this case the HeNB-GW multiplexes multiple S1-interfaces from the HeNBs towards the different MMEs. In the case of an X2-based handover between two HeNBs below the same HeNB-GW, the situation is the same.

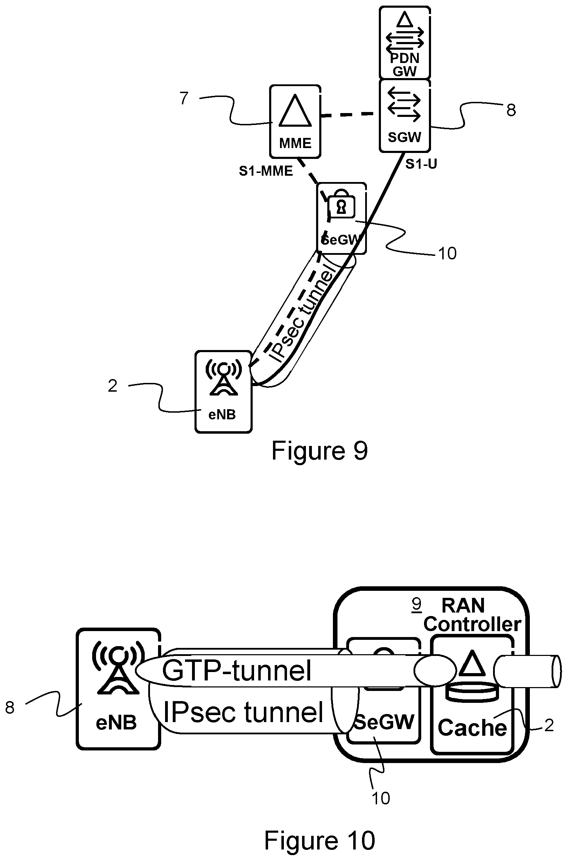

Note that it is optional to use IPsec to protect parts of the GTP-U tunnel between the eNB 6 and the SGW 8. This is further shown in Figure 9 where it is also shown that IPsec is used to protect the S1-MME interface between the eNB 6 and the MME 7. Figure 9 shows a case in which the same IPsec tunnel towards one Security Gateway (SEGW) 10 is used to protect both the S1-MME and S1-U. However, it will be appreciated that other deployments are also possible, e.g. different IPsec tunnels towards different SEGWs for different MMEs and SGWs.

A problem related to caching of LTE traffic in the RAN controller 9 is mainly due to the possibility that the SEGWs 10 could be located on a different site to the cache 2 and the RAN Controller 9. One possibility is that the cache 2 and RAN Controller 9 are in the so called Local Switching Site further out in the network than the Primary Switching Site where the MMEs and SGWs are likely to be centrally placed together with the SEGW. A related aspect is that it is possible for the SGW (and PDN-GW) to be located further out in the network, for example to the Local Switching Site. This would also mean that the SEGW 10, SGW/PDN-GW 8 and the RAN Controller 9 may end up in the same site. However, it is assumed here that the solution needs to support also the case when the SGWs 8 are still centrally placed in the Primary Switching Site together with other core network nodes, as shown in Figure 9.

A solution to this problem is to locate the SEGW 10 in the RAN Controller 9, as shown in Figure 10.

The normal functionality in IPsec (in Internet Key Exchange version 2 (IKEv2) protocol) can be used to negotiate different Traffic Selectors (TS) for the different IPsec tunnels. A TS for an IPsec tunnel defines which part of the traffic is sent in a specific IPsec tunnel. A TS can be, for example, based on destination IP addresses and this enables for example the RAN Controller IP addresses and the SGW IP addresses to be divided into different IPsec tunnels using the TSs of these IPsec tunnels.

An important aspect is also that if an IPsec tunnel is terminated in the RAN Controller 9 then all S1-U GTP-U tunnels will anyhow traverse the cache 2 and the S1-RAN based solution described above would not be needed. However, the usage of IPsec for GTP-U is optional and therefore the solution needs to also support the case when IPsec is not used.

As mentioned above, the eNB 6 can have multiple IPsec tunnels towards different SEGWs 8, for example one to the RAN Controller IP subnetwork and one towards the SGW IP subnetwork. This means that there would be no delay in needing to establish a new IPsec tunnel towards the SGW subnetwork before the described Path Switch procedure.

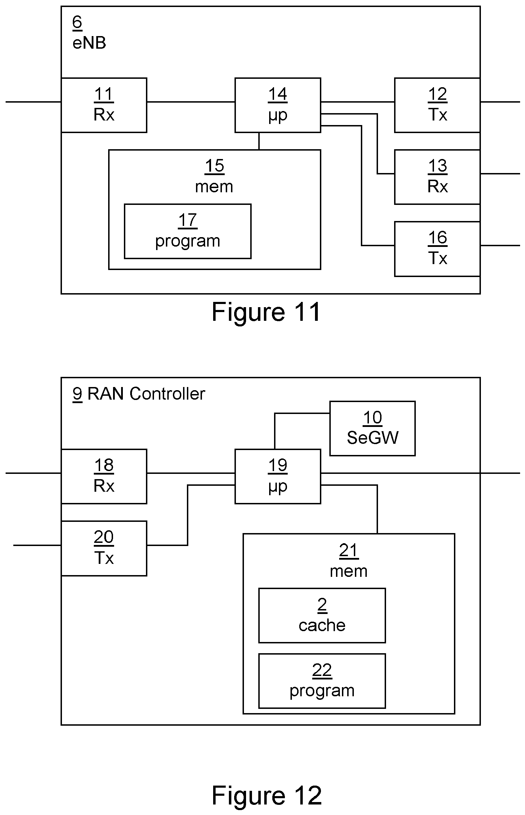

Turning to Figure 11, there is illustrated an eNodeB 6 according to an embodiment of the invention. The eNodeB 6 is provided with a first receiver 11 for receiving a message that contains the tunnelling protocol information. A transmitter 12 is provided for sending a second message towards the cache 2, the second message including a tunnelling protocol information for the eNodeB 6 and tunnelling protocol information for the SGW 8. A second receiver 13 is provided for receiving a third message from the RAN Controller 9, the third message including tunnelling protocol information for the eNodeB 6 to use toward the cache 2, and tunnelling protocol information for the Serving Gateway 8 to use towards the cache 2. The transmitter 12 (or another transmitter) is used to sending a fourth message towards the SGW 8. The fourth message includes the tunnelling protocol information required for the SGW 8 to use towards the cache 2. A processor 14 is provided for controlling sending of user plane traffic between the eNodeB 6 and the SGW 8 via the cache 2.

The processor 14 may be arranged to create local identifiers as described above. Furthermore, the eNodeB 6 may be provided with a computer readable medium in the form of a memory 15, the memory 15 being used for storing the local identifiers and tunnel endpoint identifiers in a memory. The memory 15 may also be used to store a computer program 17 which, when executed by the processor 14, causes the eNodeB 6 to behave as described above.

For the fallback mechanism, the processor 14 may be further arranged to determine that the RAN Controller 9 at which the cache 2 is located can no longer be contacted. In this case, a second transmitter 16 is provided for sending a path switch request to the MME 7, the path switch request message including an address and tunnel endpoint identifier for the eNodeB 6, in order to establish a new tunnel between the eNodeB 6 and the SGW 8 to replace the previously established first and second tunnels.

Turning now to Figure 12, there is shown a RAN Controller 9. As described above, the RAN Controller 9 is provided with a cache 2 for storing cached data. A first receiver 18 is provided for receiving a message from the eNodeB 6, the message including tunnelling protocol information for the eNodeB 6 and the SGW 8. A processor 19 is provided for establishing a first tunnel between the cache 2 and the eNodeB 6 and a second tunnel between the cache 2 and the SGW 8. A first transmitter 20 is provided for sending a further message to the eNodeB 6, the further message including tunnelling protocol information for the eNodeB 6 to use toward the cache 2, and tunnelling protocol information for the SGW 8 to use towards the cache 2. The processor 19 is arranged to send user plane traffic between the eNodeB 6 and the SGW 8 via the cache 2.

As described above, the RAN Controller 9 may also include a SeGW function 10. The RAN Controller 9 may also be provided with a computer readable medium in the form of a memory 21. This may be used to store a computer program 22 which, when executed by the processor, causes the RAN Controller 9 to behave as described above. Note that the Figure shows the cache 2 stored in the memory 21, although it will be appreciated that the cache 2 may be stored in a different memory or located remotely but accessible by the RAN Controller 9.

It will be appreciated by the person of skill in the art that various modifications may be made to the above described embodiments without departing from the scope of the present invention as defined in the appended claims. For example, while the above description refers to LTE networks, it will be appreciated that the invention may apply to other types of radio network, and base stations other than an eNodeB, such as a HeNB-G may also utilize the invention. Furthermore, the invention is described above with a cache located at the RAN Controller 9, but the invention also applies to the case where the cache is located at a separate node between the RAN Controller and the PGW/GGSN.

In the above-description of various embodiments of the present invention, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BluRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added or inserted between the blocks that are illustrated. Moreover, although some of the diagrams include arrows on communication paths to show a primary direction of communication, it is to be understood that communication may occur in the opposite direction to the depicted arrows.

Different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

The following abbreviations have been used in this specification:
- 3GPP: 3rd Generation Partnership Project
- BSC: Base Station Controller
- CN: Core Network
- DNS: Domain Name System
- E-UTRAN: Evolved Universal Terrestrial Radio Access Network
- eNB: eNodeB
- FQDN: Fully Qualified Domain Name
- GTP: GPRS Tunnelling Protocol
- HeNB: Home eNB
- IP: Internet Protocol
- LTE: Long Term Evolution
- MCC: Mobile Country Code
- MME: Mobility Management Entity
- MNC: Mobile Network Code
- PLMN: Public Land Mobile Network
- RNC: Radio Network Controller
- RAN: Radio Access Network
- SAE: System Architecture Evolution
- SEGW: Security Gateway
- SGSN: Serving GPRS Support Node
- SGW: Serving Gateway
- TEID: Tunnel Endpoint Identifier
- TS: Traffic Selector
- UE: User Equipment

## Claims

1. A method of sending user plane traffic via a cache in a node (2) located between a base station (6) and a Serving Gateway (8) in a mobile telecommunications network, the method comprising, at the base station (6) located in the Radio Access Network:
receiving (S1) a message containing tunneling protocol information identifying the Serving Gateway (8);
sending (S5) a second message towards the node (2), the second message including tunneling protocol information identifying the base station (6) and the Serving Gateway (8);
receiving (S11) a third message from the node (2), the third message including tunneling protocol information for the base station (6) to use towards the node (2), and tunneling protocol information for the Serving Gateway (8) to use towards the node (2);
sending (S12) in a fourth message tunneling protocol information for the Serving Gateway (8) to use towards the node (2); and
sending and/or receiving (S13) user plane traffic between the base station (6) and the Serving Gateway (8) via the cache in the node (2).

2. The method according to claim 1, further comprising, at the base station (6):
creating (S2) local identifiers for User Equipment associated with the user plane traffic and for a local bearer used; and
selecting (S3) tunneling protocol information identifying the base station, wherein the tunneling protocol information identifying the base station and local identifiers are included in the second message.

3. The method according to claim 1 or 2, further comprising storing (S6) the local identifiers and tunnel endpoint identifiers in a memory.

4. The method according to claim 1, 2 or 3, further comprising:
determining (S16) that the node (2) can no longer be contacted;
sending (S18) a path switch request to a Mobility Management Entity (7), the path switch request message including an address and tunneling protocol information identifying the base station (6), in order to establish a new tunnel between the base station (6) and the Serving Gateway (8) to replace the previously established first and second tunnels.

5. The method according to any of claims 1 to 4, further comprising:
selecting a node (2) from a pool of nodes;
in the event of losing a connection with the selected node (2), selecting a further node from the pool of nodes.

6. The method according to any of claims 1 to 5, wherein the base station (6) is selected from an eNodeB and a Home eNodeB Gateway, and the node comprises any of a cache, a data host, a packet analysis function and a user plane traffic optimization function.

7. A method of sending user plane traffic via a cache in a node (2) located between a base station (6) and a Serving Gateway (8) in a mobile telecommunications network, the method comprising, at the node:
receiving (S5) from the base station (6) located in the Radio Access Network a message, the message including tunneling protocol information identifying the base station (6) and the Serving Gateway (8);
establishing at the node (S8) a first tunnel between the node (2) and the base station (6) and a second tunnel between the node (2) and the Serving Gateway (8);
sending (S10) a further message to the base station (6), the further message including tunneling protocol information for the base station (6) to use towards the node (2), and tunneling protocol information for the Serving Gateway (8) to use towards the node (2);
receiving (S13) user plane traffic sent between the base station (6) and the Serving Gateway (8) via the cache in the node (2).

8. A base station (6) for use in a mobile communication network, the base station comprising:
a first receiver (11) for receiving (S1) a message comprising tunneling protocol information identifying a Serving Gateway (8);
a transmitter (12) for sending (S5) a second message towards a node (2) located in a Radio Access Network, the node comprising a cache, the second message including tunneling protocol information identifying for the base station (6) and tunneling protocol information identifying the Serving Gateway (8);
a second receiver (13) for receiving (S11) a third message from the node (2), the third message including tunneling protocol information for the base station (6) to use towards the node (2), and tunneling protocol information for the Serving Gateway (8) to use towards the node (2);
wherein the transmitter (12) is arranged to send (S12) in a fourth message tunneling protocol information for the Serving Gateway (8) to use towards the node; and
a processor (14) for sending and/or receiving (S13) user plane traffic towards the Serving Gateway (8) via the cache located in the node (2).

9. The base station (6) according to claim 8, wherein the processor (14) is further arranged to create local identifiers for User Equipment associated with the user plane traffic and for the local bearer used, and the processor (14) is further arranged to select tunneling protocol information identifying the base station, wherein the tunneling protocol information identifying the base station and local identifiers are included in the second message, the base station further comprising a computer readable medium in the form of a memory (15), the memory (15) usable for storing the local identifiers and tunnel endpoint identifiers.

10. The base station (6) according to claim 8 or 9, wherein the processor (14) is further arranged to determine (S16) that the node (2) can no longer be contacted, the base station (6) further comprising a second transmitter (16) for sending (S18) a path switch request to a Mobility Management Entity (7), the path switch request message including an address and tunneling protocol information identifying the base station (6), in order to establish a new tunnel between the base station (6) and the Serving Gateway (8) to replace the previously established first and second tunnels.

11. The base station (6) according to any of claims 8 to 10, wherein the base station (6) is selected from an eNodeB and a Home eNodeB Gateway

12. A node (2) for use between a base station (6) and a Serving Gateway (8) in a mobile communications network, the node comprising:
a receiver (18) for receiving (S5) from the base station (6) a message, the message including tunneling protocol information identifying the base station (6) and the Serving Gateway (8);
a processor (19) for arranging the establishment (S8) of a first tunnel between the node (2) and the base station (6) and a second tunnel between the node (2) and the Serving Gateway (8);
a cache for storing content;
a first transmitter (20) for sending (S10) a further message to the base station (6), the further message including tunneling protocol information for the base station (6) to use towards the cache (2), and tunneling protocol information for the Serving Gateway (8) to use towards the cache (2); and
wherein the processor (19) is arranged to send (S13) user plane traffic between the base station (6) and the Serving Gateway (8) via the node (2) using the first and second tunnels.

13. A computer program (17), comprising computer readable code which, when run on a base station (6), causes the base station (6) to behave as a base station (6) according to any of claims 8 to 11.

14. A computer program, comprising computer readable code which, when run on a node (9) for providing cached data in a mobile communications network, causes the node (9) to behave as a node (9) according to claim 12.

15. A computer program product comprising a computer readable medium (15; 21) and a computer program (17; 22) according to claim 13 or claim 14, wherein the computer program (17; 22) is stored on the computer readable medium (15; 21).

## Patentansprüche

1. Verfahren zum Senden von Benutzerebenenverkehr über einen Cache in einem Knoten (2), der sich zwischen einer Basisstation (6) und einem Dienst-Gateway (8) in einem Mobiltelekommunikationsnetz befindet, wobei das Verfahren an der Basisstation (6), die sich in dem Funkzugriffsnetzwerk befindet, umfasst:
Empfangen (S1) einer Nachricht, die Tunnelprotokollinformation aufweist, die den Dienst-Gateway (8) identifiziert;
Senden (S5) einer zweiten Nachricht in Richtung des Knoten (2), wobei die zweite Nachricht Tunnelprotokollinformation aufweist, die die Basisstation (6) und den Dienst-Gateway (8) identifiziert;
Empfangen (S11) einer dritten Nachricht von dem Knoten (2), wobei die dritte Nachricht Tunnelprotokollinformation für die Basisstation (6) zur Verwendung in Richtung des Knotens (2) und Tunnelprotokollinformation für den Dienst-Gateway (8) zur Verwendung in Richtung des Knotens (2) aufweist;
Senden (S12) von Tunnelprotokollinformation für den Dienst-Gateway (8) zur Verwendung in Richtung des Knotens (2) in einer vierten Nachricht; und
Senden und/oder Empfangen (S13) von Benutzerebenenverkehr zwischen der Basisstation (6) und dem Dienst-Gateway (8) über den Cache in dem Knoten (2).

2. Verfahren nach Anspruch 1, weiter umfassend an der Basisstation (6):
Erstellen (S2) lokaler Identifizierungselemente für Benutzerausrüstung, die mit dem Benutzerebenenverkehr verbunden ist, und für einen verwendeten lokalen Träger; und
Auswählen (S3) von Tunnelprotokollinformation, die die Basisstation identifiziert, wobei die Tunnelprotokollinformation, die die Basisstation identifiziert, und lokale Identifizierungselemente in der zweiten Nachricht enthalten sind.

3. Verfahren nach Anspruch 1 oder 2, weiter umfassend Speichern (S6) der lokalen Identifizierungselemente und von Tunnelendpunktidentifizierungselementen in einem Speicher.

4. Verfahren nach Anspruch 1, 2 oder 3, weiter umfassend:
Bestimmen (S16), dass der Knoten (2) nicht mehr kontaktiert werden kann;
Senden (S18) einer Pfadwechselanfrage an eine Mobilitäts-managementeinheit (7), wobei die Pfadwechselanfragenachricht eine Adresse und Tunnelprotokollinformation aufweist, die die Basisstation (6) identifiziert, um einen neuen Tunnel zwischen der Basisstation (6) und dem Dienst-Gateway (8) einzurichten, um die zuvor eingerichteten ersten und zweiten Tunnel zu ersetzen.

5. Verfahren nach einem der Ansprüche 1 bis 4, weiter umfassend:
Auswählen eines Knotens (2) aus einem Pool von Knoten;
im Falle des Verlustes einer Verbindung mit dem ausgewählten Knoten (2), Auswählen eines weiteren Knotens aus dem Pool von Knoten.

6. Verfahren nach einem der Ansprüche 1 bis 5, wobei die Basisstation (6) ausgewählt ist aus einem eNodeB und einem Home eNodeB-Gateway und der Knoten eines von einem Cache, einem Datenhost, einer Paketanalysefunktion und einer Benutzerebenenoptimierungsfunktion umfasst.

7. Verfahren zum Senden von Benutzerebenenverkehr über einen Cache in einem Knoten (2), der sich zwischen einer Basisstation (6) und einem Dienst-Gateway (8) in einem Mobiltelekommunikationsnetzwerk befindet, wobei das Verfahren an dem Knoten umfasst:
Empfangen (S5) einer Nachricht von der Basisstation (6), die sich in dem Funkzugriffsnetzwerk befindet, wobei die Nachricht Tunnelprotokollinformation aufweist, die die Basisstation (6) und den Dienst-Gateway (8) identifiziert;
Einrichten an dem Knoten (S8) eines ersten Tunnels zwischen dem Knoten (2) und der Basisstation (6) und eines zweiten Tunnels zwischen dem Knoten (2) und dem Dienst-Gateway (8);
Senden (S10) einer weiteren Nachricht an die Basisstation (6), wobei die weitere Nachricht Tunnelprotokollinformation für die Basisstation (6) zur Verwendung in Richtung des Knotens (2) und Tunnelprotokollinformation für den Dienst-Gateway (8) zur Verwendung in Richtung des Knotens (2) aufweist;
Empfangen (S13) von Benutzerebenenverkehr, der zwischen der Basisstation (6) und dem Dienst-Gateway (8) über den Cache in dem Knoten (2) gesendet wird.

8. Basisstation (6) zur Verwendung in einem Mobiltelekommunikationsnetzwerk, wobei die Basisstation umfasst:
einen ersten Empfänger (11) zum Empfangen (S1) einer Nachricht, die Tunnelprotokollinformation umfasst, die einen Dienst-Gateway (8) identifiziert;
einen Sender (12) zum Senden (S5) einer zweiten Nachricht in Richtung eines Knoten (2), der sich in einem Funkzugriffsnetzwerk befindet, wobei der Knoten einen Cache umfasst, wobei die zweite Nachricht Tunnel-protokollinformation, die für die Basisstation (6) identifiziert, und Tunnel-protokollinformation aufweist, die den Dienst-Gateway (8) identifiziert;
einen zweiten Empfänger (13) zum Empfangen (S11) einer dritten Nachricht von dem Knoten (2), wobei die dritte Nachricht Tunnelprotokollinformation für die Basisstation (6) zur Verwendung in Richtung des Knotens (2) und Tunnelprotokollinformation für den Dienst-Gateway (8) zur Verwendung in Richtung des Knotens (2) aufweist;
wobei der Sender (12) eingerichtet ist, um in einer vierten Nachricht Tunnelprotokollinfomation für den Dienst-Gateway (8) zur Verwendung in Richtung des Knoten zu senden (S12); und
einen Prozessor (14) zum Senden und/oder Empfangen (S13) von Benutzerebenenverkehr in Richtung des Dienst-Gateway (8) über den Cache, der sich in dem Knoten (2) befindet.

9. Basisstation (6) nach Anspruch 8, wobei der Prozessor (14) weiter eingerichtet ist, um lokale Identifizierungselemente für Benutzerausrüstung, die mit dem Benutzerebenenverkehr verbunden ist, und für den verwendeten lokalen Träger zu erstellen, und der Prozessor (14) weiter eingerichtet ist, um Tunnelprotokollinformation auszuwählen, die die Basisstation identifiziert, wobei die Tunnelprotokollinformation, die die Basisstation identifiziert, und lokale Identifizierungselemente in der zweiten Nachricht enthalten sind, wobei die Basisstation weiter ein rechnerlesbares Medium in Form eines Speichers (15) umfasst, wobei der Speicher (15) zum Speichern der lokalen Identifizierungs-elemente und Tunnelendpunktidentifizierungselemente verwendet werden kann.

10. Basisstation (6) nach Anspruch 8 oder 9, wobei der Prozessor (14) weiter eingerichtet ist, um zu bestimmen (S16), dass der Knoten (2) nicht mehr kontaktiert werden kann, wobei die Basisstation (6) weiter einen zweiten Sender (16) zum Senden (S18) einer Pfadwechselanfrage an eine Mobilitäts-managementeinheit (7) umfasst, wobei die Pfadwechselanfragenachricht eine Adresse und Tunnelprotokollinformation aufweist, die die Basisstation (6) identifiziert, um einen neuen Tunnel zwischen der Basisstation (6) und dem Dienst-Gateway (8) einzurichten, um die zuvor eingerichteten ersten und zweiten Tunnel zu ersetzen.

11. Basisstation (6) nach einem der Ansprüche 8 bis 10, wobei die Basisstation (6) aus einem eNodeB und einem Home eNodeB-Gateway ausgewählt wird.

12. Knoten (2) zur Verwendung zwischen einer Basisstation (6) und einem Dienst-Gateway (8) in einem Mobiltelekommunikationsnetz, wobei der Knoten umfasst:
einen Empfänger (18) zum Empfangen (S5) einer Nachricht von der Basisstation (6), wobei die Nachricht Tunnelprotokollinformation aufweist, die die Basisstation (6) und den Dienst-Gateway (8) identifiziert;
einen Prozessor (19) zum Einrichten der Einrichtung (S8) eines ersten Tunnels zwischen dem Knoten (2) und der Basisstation (6) und eines zweiten Tunnels zwischen dem Knoten (2) und dem Dienst-Gateway (8);
einen Cache zum Speichern von Inhalten;
einen ersten Sender (20) zum Senden (S10) einer weiteren Nachricht an die Basisstation (6), wobei die weitere Nachricht Tunnelprotokollinformation für die Basisstation (6) zur Verwendung in Richtung des Caches (2) und Tunnelprotokollinformation für den Dienst-Gateway (8) zur Verwendung in Richtung des Caches (2) aufweist; und
wobei der Prozessor (19) eingerichtet ist, um Benutzerebenenverkehr zwischen der Basisstation (6) und dem Dienst-Gateway (8) über den Knoten (2) unter Verwendung der ersten und zweiten Tunnel zu senden (S13).

13. Computerprogramm (17), umfassend Computer-lesbaren Code, der beim Ausführen auf einer Basisstation (6) bewirkt, dass sich die Basisstation (6) wie eine Basisstation (6) nach einem der Ansprüche 8 bis 11 verhält.

14. Computerprogramm, umfassend Computer-lesbaren Code, der beim Ausführen auf einem Knoten (9) zum Bereitstellen von gecachten Daten in einem Mobiltelekommunikationsnetzwerk bewirkt, dass sich der Knoten (9) wie ein Knoten (9) nach Anspruch 12 verhält.

15. Rechnerprogrammprodukt umfassend ein rechnerlesbares Medium (15; 21) und ein Computerprogramm (17; 22) nach Anspruch 13 oder Anspruch 14, wobei das Computerprogramm (17; 22) auf dem rechnerlesbaren Medium (15; 21) gespeichert ist.

## Revendications

1. Procédé d'envoi d'un trafic de plan utilisateur par l'intermédiaire d'un cache dans un nœud (2) situé entre une station de base (6) et une Passerelle de Service (8) dans un réseau de télécommunications mobiles, le procédé comprenant, au niveau de la station de base (6) située dans le Réseau d'Accès Radio :
la réception (S1) d'un message contenant des informations de protocole de tunneling identifiant la Passerelle de Service (8) ;
l'envoi (S5) d'un deuxième message vers le nœud (2), le deuxième message incluant des informations de protocole de tunneling identifiant la station de base (6) et la Passerelle de Service (8) ;
la réception (S11) d'un troisième message provenant du nœud (2), le troisième message incluant des informations de protocole de tunneling que la station de base (6) doit utiliser vers le nœud (2), et des informations de protocole de tunneling que la Passerelle de Service (8) doit utiliser vers le nœud (2) ;
l'envoi (S12), dans un quatrième message, d'informations de protocole de tunneling que la Passerelle de Service (8) doit utiliser vers le nœud (2) ; et
l'envoi et/ou la réception (S13) de trafic de plan utilisateur entre la station de base (6) et la Passerelle de Service (8) par l'intermédiaire du cache dans le nœud (2).

2. Procédé selon la revendication 1, comprenant en outre, au niveau de la station de base (6) :
la création (S2) d'identificateurs locaux pour un Équipement d'Utilisateur associé au trafic de plan utilisateur et pour un porteur local utilisé ; et
la sélection (S3) d'informations de protocole de tunneling identifiant la station de base, dans laquelle les informations de protocole de tunneling identifiant la station de base et des identificateurs locaux sont inclus dans le deuxième message.

3. Procédé selon la revendication 1 ou 2, comprenant en outre le stockage (S6) des identificateurs locaux et des identificateurs d'extrémité de tunnel dans une mémoire.

4. Procédé selon la revendication 1, 2 ou 3, comprenant en outre :
la détermination (S16) que le nœud (2) ne peut plus être mis en contact ;
l'envoi (S18) d'une demande de commutation de trajet à une Entité de Gestion de Mobilité (7), le message de demande de commutation de trajet incluant une adresse et des informations de protocole de tunneling identifiant la station de base (6), afin d'établir un nouveau tunnel entre la station de base (6) et la Passerelle de Service (8) pour remplacer les premier et second tunnels précédemment établis.

5. Procédé selon l'une quelconque des revendications 1 à 4, comprenant en outre :
la sélection d'un nœud (2) depuis un groupe de noeuds ;
en cas de perte d'une connexion avec le nœud sélectionné (2), la sélection d'un autre nœud depuis le groupe de nœuds.

6. Procédé selon l'une quelconque des revendications 1 à 5, dans lequel la station de base (6) est sélectionnée parmi un eNœud B et une Passerelle d'eNœud B domestique, et le nœud comprend l'un quelconque parmi un cache, un hôte de données, une fonction d'analyse de paquet et une fonction d'optimisation de trafic de plan utilisateur.

7. Procédé d'envoi d'un trafic de plan utilisateur par l'intermédiaire d'un cache dans un nœud (2) situé entre une station de base (6) et une Passerelle de Service (8) dans un réseau de télécommunications mobiles, le procédé comprenant, au niveau du nœud :
la réception (S5), depuis la station de base (6) située dans le Réseau d'Accès Radio, d'un message, le message incluant des informations de protocole de tunneling identifiant la station de base (6) et la Passerelle de Service (8) ;
l'établissement au niveau du nœud (S8) d'un premier tunnel entre le nœud (2) et la station de base (6) et d'un second tunnel entre le nœud (2) et la Passerelle de Service (8) ;
l'envoi (S10) d'un autre message à la station de base (6), l'autre message incluant des informations de protocole de tunneling que la station de base (6) doit utiliser vers le nœud (2), et des informations de protocole de tunneling que la Passerelle de Service (8) doit utiliser vers le nœud (2) ;
la réception (S13) d'un trafic de plan utilisateur envoyé entre la station de base (6) et la Passerelle de Service (8) par l'intermédiaire du cache dans le nœud (2).

8. Station de base (6) pour une utilisation dans un réseau de communications mobiles, la station de base comprenant :
un premier récepteur (11) pour recevoir (S1) un message comprenant des informations de protocole de tunneling identifiant une Passerelle de Service (8) ;
un émetteur (12) pour envoyer (S5) un deuxième message vers un nœud (2) situé dans un Réseau d'Accès Radio, le nœud comprenant un cache, le deuxième message incluant des informations de protocole de tunneling identifiant la station de base (6) et des informations de protocole de tunneling identifiant la Passerelle de Service (8) ;
un second récepteur (13) pour recevoir (S11) un troisième message provenant du nœud (2), le troisième message incluant des informations de protocole de tunneling que la station de base (6) doit utiliser vers le nœud (2), et des informations de protocole de tunneling que la Passerelle de Service (8) doit utiliser vers le nœud (2) ;
dans laquelle l'émetteur (12) est agencé pour envoyer (S12), dans un quatrième message, des informations de protocole de tunneling que la Passerelle de Service (8) doit utiliser vers le nœud ; et
un dispositif de traitement (14) pour envoyer et/ou recevoir (S13) un trafic de plan utilisateur vers la Passerelle de Service (8) par l'intermédiaire du cache situé dans le nœud (2).

9. Station de base (6) selon la revendication 8, dans laquelle le dispositif de traitement (14) est en outre agencé pour créer des identificateurs locaux pour un Équipement d'Utilisateur associé au trafic de plan utilisateur et pour le porteur local utilisé, et le dispositif de traitement (14) est en outre agencé pour sélectionner des informations de protocole de tunneling identifiant la station de base, dans laquelle les informations de protocole de tunneling identifiant la station de base et des identificateurs locaux sont inclus dans le deuxième message, la station de base comprenant en outre un support lisible par ordinateur sous la forme d'une mémoire (15), la mémoire (15) pouvant être utilisée pour stocker les identificateurs locaux et des identificateurs d'extrémité de tunnel.

10. Station de base (6) selon la revendication 8 ou 9, dans laquelle le dispositif de traitement (14) est en outre agencé pour déterminer (S16) que le nœud (2) ne peut plus être mis en contact, la station de base (6) comprenant en outre un second émetteur (16) pour envoyer (S18) une demande de commutation de trajet à une Entité de Gestion de Mobilité (7), le message de demande de commutation de trajet incluant une adresse et des informations de protocole de tunneling identifiant la station de base (6), afin d'établir un nouveau tunnel entre la station de base (6) et la Passerelle de Service (8) pour remplacer les premier et second tunnels précédemment établis.

11. Station de base (6) selon l'une quelconque des revendications 8 à 10, dans laquelle la station de base (6) est sélectionnée parmi un eNœud B et une Passerelle d'eNœud B domestique.

12. Nœud (2) pour une utilisation entre une station de base (6) et une Passerelle de Service (8) dans un réseau de communications mobiles, le nœud comprenant :
un récepteur (18) pour recevoir (S5), depuis la station de base (6), un message, le message incluant des informations de protocole de tunneling identifiant la station de base (6) et la Passerelle de Service (8) ;
un dispositif de traitement (19) pour agencer l'établissement (S8) d'un premier tunnel entre le nœud (2) et la station de base (6) et d'un second tunnel entre le nœud (2) et la Passerelle de Service (8) ;
un cache pour stocker du contenu ;
un premier émetteur (20) pour envoyer (S10) un autre message à la station de base (6), l'autre message incluant des informations de protocole de tunneling que la station de base (6) doit utiliser vers le cache (2), et des informations de protocole de tunneling que la Passerelle de Service (8) doit utiliser vers le cache (2) ; et
dans lequel le dispositif de traitement (19) est agencé pour envoyer (S13) un trafic de plan utilisateur entre la station de base (6) et la Passerelle de Service (8) par l'intermédiaire du nœud (2) en utilisant les premier et second tunnels.

13. Programme informatique (17), comprenant un code lisible par ordinateur qui, lorsqu'il est exécuté sur une station de base (6), amène la station de base (6) à se comporter comme une station de base (6) selon l'une quelconque des revendications 8 à 11.

14. Programme informatique, comprenant un code lisible par ordinateur qui, lorsqu'il est exécuté sur un nœud (9) pour fournir des données en cache dans un réseau de communications mobiles, amène le nœud (9) à se comporter comme un nœud (9) selon la revendication 12.

15. Produit de programme informatique comprenant un support lisible par ordinateur (15 ; 21) et un programme informatique (17 ; 22) selon la revendication 13 ou la revendication 14, dans lequel le programme informatique (17 ; 22) est stocké sur le support lisible par ordinateur (15 ; 21).
